(19) **Europäisches Patentamt / European Patent Office / Office européen des brevets**

(11) **EP 2 707 514 B1**

(12) # FASCICULE DE BREVET EUROPEEN

(45) Date de publication et mention de la délivrance du brevet:
**09.11.2016 Bulletin 2016/45**

(21) Numéro de dépôt: **12728627.6**

(22) Date de dépôt: **03.05.2012**

(51) Int Cl.:
*C21D 1/20* (2006.01)      *C21D 8/02* (2006.01)
*C21D 9/46* (2006.01)      *C22C 38/02* (2006.01)
*C22C 38/04* (2006.01)      *C22C 38/06* (2006.01)

(86) Numéro de dépôt international:
**PCT/FR2012/000174**

(87) Numéro de publication internationale:
**WO 2012/153016 (15.11.2012 Gazette 2012/46)**

(54) **TÔLE D'ACIER A HAUTES CARACTERISTIQUES MECANIQUES DE RESISTANCE, DE DUCTILITE ET DE FORMABILITE, PROCEDE DE FABRICATION ET UTILISATION DE TELLES TÔLES**

STAHLBLECH MIT HOHER MECHANISCHER FESTIGKEIT, DUKTILITÄT UND FORMBARKEIT, HERSTELLUNGSVERFAHREN UND ANWENDUNG DERARTIGER BLECHE

STEEL SHEET WITH HIGH MECHANICAL STRENGTH, DUCTILITY AND FORMABILITY PROPERTIES, PRODUCTION METHOD AND USE OF SUCH SHEETS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **10.05.2011 PCT/FR2011/000286**

(43) Date de publication de la demande:
**19.03.2014 Bulletin 2014/12**

(73) Titulaire: **ArcelorMittal**
**1160 Luxembourg (LU)**

(72) Inventeurs:
- **ALLAIN, Sébastien**
  **F-54700 Pont a Mousson (FR)**
- **MAHIEU, Jan**
  **B-9200 Dendermonde (BE)**
- **CROUVIZIER, Mickaël Denis**
  **F-57300 Mondelange (FR)**
- **MASTRORILLO, Thierry**
  **F-57290 Seremange Erzange (FR)**
- **HENNION, Arnaud**
  **B-4607 Dalhem (BE)**

(74) Mandataire: **Plaisant, Sophie Marie**
**ArcelorMittal France**
**Research & Development**
**Intellectual Property**
**6, rue André Campra**
**Immeuble Le Cezanne**
**93200 Saint Denis (FR)**

(56) Documents cités:
EP-A1- 1 559 798      US-A- 5 328 528
US-A1- 2010 307 644

- **KOH-ICHI SUGIMOTO ET AL: "Effects of Second Phase Morphology on RetainedAustenite Morphology and Tensile Properties in a TRIP-aided Dual-phase Steel Sheet.", ISIJ INTERNATIONAL, vol. 33, no. 7, 1 janvier 1993 (1993-01-01), pages 775-782, XP055016842, ISSN: 0915-1559, DOI: 10.2355/isijinternational.33.775**
- **BOUQUEREL J ET AL: "Microstructure-based model for the static mechanical behaviour of multiphase steels", ACTA MATERIALIA, ELSEVIER, OXFORD, GB, vol. 54, no. 6, 1 avril 2006 (2006-04-01), pages 1443-1456, XP025027280, ISSN: 1359-6454, DOI: 10.1016/J.ACTAMAT.2005.10.059 [extrait le 2006-04-01]**

**Description**

La présente invention couvre la fabrication de tôles d'aciers dits « multiphasés », présentant simultanément une résistance mécanique et une capacité de déformation permettant de réaliser des opérations de mise en forme à froid. L'invention concerne plus précisément des aciers présentant une résistance mécanique supérieure à 1000 MPa, un allongement uniforme supérieur à 12% et une pliabilité en V supérieure à 90°. Les véhicules terrestres à moteur (automobiles, moissonneuses batteuses, remorques, semi-remorques...) constituent notamment un domaine d'application de ces tôles d'aciers avec pour applications possibles les pièces de structure, les éléments de renforts voire la fabrication de pièces résistantes à l'abrasion.

La forte demande de réduction d'émissions de gaz à effet de serre, associée à la croissance des exigences de sécurité automobile et les prix du carburant ont poussé les constructeurs de véhicules terrestres à moteur à utiliser de plus en plus d'aciers à résistance mécanique améliorée dans la carrosserie afin de réduire l'épaisseur des pièces et donc le poids des véhicules tout en maintenant les performances de résistance mécanique des structures. Dans cette perspective, les aciers alliant une résistance élevée à une formabilité suffisante pour la mise en forme sans apparition de fissures prennent une importance grandissante. Il a ainsi été proposé, dans le temps et de manière successive, plusieurs familles d'aciers offrant divers niveaux de résistance mécanique.

Il a été proposé des aciers comportant des éléments de micro-alliage dont le durcissement est obtenu simultanément par affinage de la taille de grains et par précipitations fines. Le développement d'aciers de plus en plus durs a ensuite connu la croissance des aciers dits « Dual Phase » où la présence de martensite au sein d'une matrice ductile ferritique permet d'obtenir une résistance mécanique supérieure à 400 MPa associée à une bonne aptitude au formage à froid.

Dans le but d'atteindre des caractéristiques de résistance mécanique, ductilité et formabilité encore plus avantageuses pour l'industrie de l'automobile par exemple, les aciers « TRIP » pour « Transformation Induced Plasticify » ont été développés. Ces derniers ont une structure complexe comprenant: une structure ductile, la ferrite, ainsi que de la martensite qui est une structure dure apportant les hautes caractéristiques mécaniques et l'austénite résiduelle contribuant à la fois à la résistance et à la ductilité grâce à l'effet TRIP.

Cet effet TRIP désigne un mécanisme selon lequel, sous une déformation ultérieure, par exemple lors d'une sollicitation uni-axiale, l'austénite résiduelle d'une tôle ou flan en acier TRIP se transforme progressivement en martensite, ce qui se traduit par une consolidation importante retardant ainsi l'apparition de fissure. Néanmoins, les aciers dits TRIP présentent des résistances mécaniques inférieures à 1000 MPa car leur teneur en ferrite polygonale qui est une structure peu résistante et très ductile, est supérieure à un quart de la proportion surfacique totale.

Afin de répondre à cette demande d'aciers à résistance mécanique supérieure à 1000 MPa, il est donc nécessaire de réduire la fraction de structure à faible résistance mécanique et remplacer celle-ci par une phase plus durcissante. Cependant, il est connu que dans le domaine des aciers au carbone, une augmentation de la résistance mécanique s'accompagne généralement d'une perte de ductilité. En outre, les constructeurs de véhicules terrestres à moteur définissent des pièces de plus en plus complexes qui nécessitent des aciers permettant d'atteindre une pliabilité supérieure ou égale à 90° sans apparition d'une fissure.

Les teneurs en éléments chimiques indiquées par la suite sont en pourcentage massique.

On a pu prendre connaissance du brevet WO2007077933 faisant état d'une microstructure composée de Bainite, de martensite et d'austénite résiduelle. La composition chimique de la tôle revendiquée comprend 0,10-0,60% C, 1.0-3.0% Si, 1-3,5% Mn, jusque 0,15% de P, jusque 0,02% de S, jusque 1,5% d'Al, et 0,003 à 2% de Cr, le reste étant constitué de fer et d'impuretés. La microstructure dans le cadre de ce brevet est obtenue lors du recuit par un maintien après refroidissement primaire sous le point de début de transformation martensitique Ms. On obtient de fait une microstructure comprenant un mélange de martensite revenue et/ou partitionnée. Le principal avantage revendiqué est une amélioration de la résistance par l'endommagement à l'hydrogène. La présence de martensite, qui est un composant durcissant dans une matrice bainitique plus molle, ne permettra pas d'atteindre la ductilité et la pliabilité escomptées dans le cadre de l'invention.

D'autre part, on a connaissance du brevet GB 2 452 231 qui décrit la fabrication de tôles d'une résistance supérieure à 980 MPa avec une résistance satisfaisante à la rupture différée et une aptitude satisfaisante à l'expansion de trou et au soudage par point. La composition chimique de la tôle comprend 0,12-0,25% C, 1.0-3.0% Si, 1.5-3% Mn, jusque 0,15% de P, jusque 0,02% de S jusque 0,4% d'Al, le reste étant constitué de fer et d'impuretés. En outre, le ratio de la teneur en poids de Si sur celle de C, Si/C est compris dans l'intervalle 7-14. La microstructure de la tôle comprend au moins 50% de ferrite bainitique, au moins 3% d'austénite résiduelle en lattes, et de l'austénite sous forme massive, dont la taille moyenne est inférieure ou égale à 10 micromètres, cette austénite sous forme massive étant présente à hauteur de 1% jusqu'à la moitié de la teneur en austénite en lattes. Ce brevet reste muet quant à la pliabilité de la tôle produite et il mentionne l'absence de carbures dans la bainite.

On a également connaissance de la publication US2010/0307644 A1, relative à la fabrication de tôles laminées à froid et recuites avec une résistance mécanique supérieure à 1200MPa. Ces tôles ont une microstructure comprenant de 15 à 90% de bainite, le reste étant constitué d'îlots de martensite et d'austénite résiduelle. Ce document ne divulgue cependant pas la présence d'une précipitation contrôlée de carbures entre les lattes de bainite. De plus, il ne comporte pas d'enseignement sur l'influence de la ferrite polygonale sur l'aptitude au pliage.

Le but de la présente invention est de résoudre les problèmes évoqués ci-dessus. Elle vise à mettre à disposition un acier laminé à froid présentant une résistance mécanique supérieure à 1000 MPa, conjointement avec un allongement uniforme supérieur à 12%. L'invention vise également à mettre à disposition un acier avec une aptitude de mise en forme telle qu'un angle de 90° est atteint lors d'un pli en V sans apparition de fissure.

De préférence, l'invention vise également à mettre à disposition un acier dont la composition ne comporte pas d'éléments de micro-alliage coûteux tels que le titane, le niobium, ou le vanadium. De la sorte, le coût de fabrication est abaissé et les schémas de fabrication thermomécaniques sont simplifiés.

A cet effet, l'invention a pour objet une tôle d'acier laminée à froid et recuite de résistance mécanique supérieure ou égale à 1000 MPa, d'allongement uniforme supérieur ou égal à 12% dont la composition comprend, les teneurs étant exprimées en poids,

$$0,15\% \leq C \leq 0,25\%$$

$$1,8\% \leq Mn \leq 3,0\%$$

$$1,2\% \leq Si \leq 2\%$$

$$Al \leq 0,10\%$$

$$0\% \leq Cr \leq 0,50\%$$

$$0\% \leq Cu \leq 1\%$$

$$0\% \leq Ni \leq 1\%$$

$$S \leq 0,005\%$$

$$P \leq 0,020\%$$

$$Nb \leq 0,015\%$$

$$Ti \leq 0,020\%$$

$$V \leq 0,015\%$$

$$Co \leq 1\%$$

$$N \leq 0,008\%$$

$$B \leq 0,001\%$$

étant entendu que

$$Mn+Ni+Cu \leq 3\%$$

le reste de la composition étant constitué de fer et d'impuretés inévitables résultant de l'élaboration, la microstructure étant constituée, en proportions surfaciques, de 5 à 20 % de ferrite polygonale, de 10 à 15% d'austénite résiduelle, de 5 à 15 % de martensite, le solde étant constitué de bainite sous forme de lattes et comprenant entre lesdites lattes des carbures tels que le nombre N des carbures inter-lattes de taille supérieure à 0,1 micromètre par unité de surface est inférieur ou égal à 50000 / mm². 

La tôle selon l'invention peut en outre présenter les caractéristiques suivantes, prises isolément ou en combinaison :

-   la composition comprend, la teneur étant exprimée en poids,

$$- \quad 0,18\% \leq C \leq 0,22\%$$

-   la composition comprend, la teneur étant exprimée en poids

$$- \quad 2\% \leq Mn \leq 2,6\%$$

-   la composition comprend, la teneur étant exprimée en poids

$$- \quad 1,4\% \leq Si \leq 1,8\%$$

-   la composition comprend, la teneur étant exprimée en poids

$$- \quad 0\% \leq Cr \leq 0,35\%$$

-   L'angle de pliage en V à partir duquel apparaît la fissure est supérieur ou égal à 90°.

-   la tôle d'acier comporte en outre un revêtement de zinc ou d'alliage de zinc.

L'invention a également pour objet un procédé de fabrication d'une tôle d'acier laminée à froid recuite de résistance supérieure ou égale à 1000 MPa et d'allongement supérieur ou égal à 12%, dont l'angle de pliage en V à partir duquel apparaît la fissure est supérieur ou égal à 90°, comprenant les étapes selon lesquelles :

-   on approvisionne un acier de composition l'invention, puis
-   on coule ledit acier sous forme de demi-produit, puis
-   on porte ledit demi-produit à une température $T_{rech}$ supérieure à 1150°C pour obtenir un demi-produit réchauffé, puis
-   on lamine à chaud ledit demi-produit réchauffé, la température de fin de laminage à chaud $T_{fl}$ étant supérieure ou égale à 850°C pour obtenir une tôle laminée à chaud, puis
-   on bobine ladite tôle laminée à chaud à une température $T_{bob}$ comprise entre 540 et 590°C pour obtenir une tôle laminée à chaud bobinée puis,
-   on refroidit ladite tôle laminée à chaud bobinée jusqu'à la température ambiante, puis,
-   on effectue un recuit dit base de ladite tôle laminée à chaud bobinée de telle sorte que la résistance mécanique soit inférieure ou égale à 1000 MPa en tout point de ladite tôle laminée à chaud bobinée, puis
-   on débobine et on décape ladite tôle laminée à chaud bobinée recuite de façon à obtenir une tôle laminée à chaud apte au laminage à froid, puis
-   on lamine à froid ladite tôle laminée à chaud apte au laminage à froid avec un taux de réduction compris entre 30 et 80% de façon à obtenir une tôle laminée à froid, puis,

- on recuit ladite tôle laminée à froid en la réchauffant à une vitesse Vc comprise entre 2 et 6°C par seconde jusqu'à une température $T_1$ comprise entre Ac3-15°C et Ac3-45°C, pendant une durée $t_1$ supérieure ou égale à 50 secondes, puis,
- on refroidit ladite tôle laminée à froid en la soumettant à une première étape de refroidissement à une vitesse de refroidissement comprise entre 50 et 1500°C/s puis à une seconde étape de refroidissement telle que la température de fin de refroidissement $T_{fr}$ de ladite seconde étape soit comprise entre une température $T_{fr1}$ égale à Ms-20°C et une température $T_{fr2}$ égale à Ms+40°C, puis
- on maintient dans l'intervalle de température compris entre $T_{fr1}$ et $T_{fr2}$ ladite tôle laminée à froid pendant une durée $t_2$ comprise entre 100 et 1000 secondes, puis
- on refroidit la tôle laminée à froid à une vitesse $V_{R2}$ comprise entre 3 et 25°C par seconde jusqu'à la température ambiante de façon à obtenir une tôle laminée à froid et recuite.

Le procédé selon l'invention peut en outre présenter les caractéristiques suivantes, prises isolément ou en combinaison :

- la température Tfl est supérieure ou égale à 900°C,
- le recuit base comporte un maintien dont la température Tm et le temps tm sont tels que :

$$2,29 \times Tm\ (°C) + 18,6 \times tm\ (h) \geq 1238,$$

la température de maintien Tm étant en outre supérieure à 410°C,
- la température $T_1$ est comprise entre 790°C et 820°C,
- on approvisionne une tôle laminée à froid recuite selon l'invention et on la revêt de zinc ou d'alliage de zinc,
- on approvisionne une tôle laminée à froid recuite selon l'invention et on la recuit à une température de maintien $T_{base}$ comprise entre 150°C et 200°C pendant un temps de maintien $t_{base}$ compris entre 10h et 48h.

L'invention a également pour objet l'utilisation d'une tôle laminée à froid et recuite, ou d'une tôle revêtue, selon l'invention ou fabriquée par un procédé selon l'invention pour la fabrication de pièces pour véhicules terrestres à moteur.
D'autres caractéristiques et avantages de l'invention apparaîtront au cours de la description ci-dessous, donnée à titre d'exemple et faite en référence aux figures annexées ci-jointes dans lesquelles:

- la figure 1 présente les dimensions de l'éprouvette de traction utilisée pour obtenir les propriétés mécaniques,
- la figure 2 présente un exemple de microstructure d'une tôle d'acier selon l'invention,

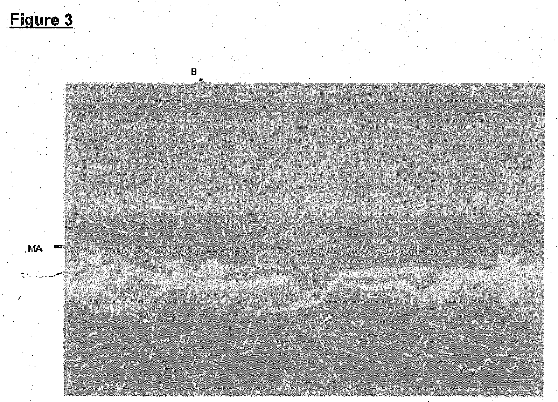

- la figure 3 présente un exemple de microstructure d'une tôle d'acier ne correspondant pas à l'invention.

Dans les figures susmentionnées, FP indique la ferrite polygonale, B indique la bainite, MA indique les îlots de martensite et d'austénite
Les recherches menées dans le cadre de la présente invention ont pu montrer l'intérêt de la présence de la ferrite polygonale, celle-ci se caractérise par une densité de dislocations inférieure à celle de la ferrite bainitique. La ferrite polygonale est en effet formée lors d'un recuit inter-critique et permet d'atteindre une pliabilité supérieure à 90° lors d'un pliage en V ainsi qu'un allongement uniforme au dessus de 12%.
L'influence de la présence de ferrite polygonale que l'on forme sous le point Ac3, dans le domaine inter-critique (ferrite + austénite) lors du maintien au recuit a été étudiée. La présence de cette ferrite dans une matrice bainitique comportant de l'austénite résiduelle, et inévitablement aussi de la martensite, pouvait laisser prévoir, du fait de la différence de duretés entre ces différents composés, que la formabilité serait réduite. De manière surprenante, la présence de ferrite polygonale entre 5 et 20% s'est avérée être un facteur d'amélioration de la pliabilité de la tôle de l'invention qui a permis d'être au dessus de 90° d'angle de pliage en V sans apparition de fissure.
De même il a pu être démontré que l'absence de cette ferrite polygonale, nuisait aussi à la ductilité mesurée par le critère de l'allongement uniforme.
En ce qui concerne la composition chimique de l'acier, le carbone joue un rôle important sur la formation de la microstructure et sur les propriétés mécaniques en termes de ductilité et de résistance via l'effet dit TRIP qu'il va produire avec l'austénite résiduelle. A partir de la structure majoritairement austénitique formée à haute température lors du maintien à la température $T_1$, on effectue un refroidissement puis un maintien pendant lequel une transformation bainitique intervient. Lors de celui-ci, la bainite est formée initialement au sein d'une matrice encore majoritairement austénitique. Le carbone ayant une solubilité nettement inférieure dans la ferrite par rapport à celle dans l'austénite, est rejeté dans ladite austénite et précipite partiellement sous forme de très fins carbures. La finesse des carbures peut être telle que le nombre N desdits carbures inter lattes de taille supérieure à 0,1 micromètre par unité de surface soit inférieur ou égal à 50000 / mm$^2$.

Grâce à certains éléments d'alliage présents dans les compositions selon l'invention, en particulier le Silicium, la précipitation de carbures, notamment de cémentite, intervient de façon limitée. Ainsi, l'austénite, non encore transformée, s'enrichit progressivement en carbone pratiquement sans qu'une précipitation de carbures non fins n'intervienne à l'interface austénite-bainite. Cet enrichissement est tel que l'austénite est stabilisée, c'est-à-dire que la transformation martensitique à partir de cette austénite est limitée aux proportions visées de 5 à 15% lors du refroidissement et ce, jusqu'à la température ambiante. Ainsi une quantité maitrisée de martensite apparaît, contribuant à l'augmentation de la résistance mécanique de manière contrôlée.

Selon l'invention, la teneur en carbone, en poids, est comprise entre 0,15 et 0,25%. Si la teneur en carbone de l'invention est au-dessous de 0,15% en poids, la résistance mécanique devient insuffisante et la stabilité de l'austénite résiduelle est insuffisante. Au-delà de 0,25%, la soudabilité devient de plus en plus réduite car on forme des microstructures de faible ténacité dans la Zone Affectée Thermiquement (ZAT) ou dans la zone fondue en cas de soudage autogène, néanmoins l'effet TRIP serait amélioré au-delà de 0,25% de carbone.

Selon un mode préféré, la teneur en carbone est comprise entre 0,18 et 0,22%. Au sein de cette plage, la soudabilité est satisfaisante, la stabilisation de l'austénite est optimisée et la fraction de martensite est dans la gamme visée de l'invention.

Le manganèse est un élément durcissant par solution solide de substitution, il stabilise l'austénite et abaisse la température de transformation Ac3. Le manganèse contribue donc à une augmentation de la résistance mécanique. Selon l'invention, une teneur minimale de 1,8 % en poids est nécessaire pour obtenir les propriétés mécaniques désirées. Cependant, au-delà de 3,0%, son caractère gammagène conduit à la formation d'une structure en bandes trop marquée pouvant nuire aux propriétés de mise en forme de la pièce de structure automobile, de plus la revêtabilité sera réduite. A titre préférentiel, un intervalle de teneur en manganèse compris entre 2% et 2,6%, on combine ainsi une résistance mécanique satisfaisante sans accroître le risque de formation de structures en bandes néfastes à la mise en forme ni augmenter la trempabilité dans les alliages soudés, ce qui nuirait à la capacité au soudage de la tôle de l'invention.

La stabilisation de l'austénite résiduelle est rendue possible par l'addition de silicium qui ralentit considérablement la précipitation des carbures lors du cycle de recuit et plus particulièrement lors de la transformation bainitique. Ceci provient du fait que la solubilité du Silicium dans la cémentite est très faible et que cet élément augmente l'activité du carbone dans l'austénite. Toute formation de cémentite sera donc précédée d'une étape de rejet de Si à l'interface. L'enrichissement de l'austénite en carbone mène donc à sa stabilisation à la température ambiante sur la tôle d'acier recuite. Par la suite, l'application d'une contrainte extérieure, de mise en forme par exemple, va conduire à la transformation de cette austénite en martensite. Cette transformation a pour résultat d'améliorer aussi la résistance à l'endommagement, Au regard des propriétés visées par l'invention, une addition de silicium en quantité supérieure à 2% va promouvoir sensiblement la ferrite et la résistance mécanique visée ne serait pas atteinte, de plus on formerait des oxydes fortement adhérents qui mèneraient à des défauts de surface, la teneur minimale doit aussi être fixée à 1,2% en poids pour obtenir l'effet stabilisant sur l'austénite. De manière préférentielle, la teneur en silicium sera comprise entre 1,4 et 1,8% afin d'optimiser les effets susmentionnés.

La teneur en chrome doit être limitée à 0,5%, cet élément permet de contrôler la formation de ferrite proeutectoïde au refroidissement lors du recuit à partir de ladite température $T_1$, cette ferrite, en quantité élevée diminue la résistante mécanique nécessaire à certaines pièces visées par l'invention. Cet élément permet de durcir et d'affiner la microstructure bainitique. Préférentiellement la teneur en chrome sera inférieure à 0,35 % pour des raisons de coûts et pour éviter un durcissement trop important.

Le nickel et le cuivre ont des effets sensiblement similaires à celui du manganèse pour l'invention mais ont des poids différents en ce qui concerne leur pouvoir stabilisant pour l'austénite. C'est pourquoi la combinaison de ces trois éléments dans la composition chimique de l'invention doit respecter la relation suivante : Mn+Ni+Cu $\leq$ 3%.

En quantité supérieure à 1%, le nickel, qui est un puissant stabilisateur d'austénite, va promouvoir une stabilisation trop prononcée de cette dernière, la transformation sous sollicitation mécanique sera plus difficile à obtenir et l'effet sur la ductilité sera moindre. Au delà de 1%, le coût de l'addition de cet élément d'alliage est, là aussi, excessif.

En quantité supérieure à 1%, le cuivre, qui est aussi un stabilisateur d'austénite, va promouvoir une stabilisation trop prononcée de cette dernière, la transformation sous sollicitation mécanique sera plus difficile à obtenir et l'effet sur la ductilité sera moindre. Au delà de 1%, le coût de l'addition de cet élément d'alliage est, là aussi, excessif et peut provoquer des défauts de forgeabilité à chaud.

La teneur en aluminium est limitée à 0,10% en poids, cet élément est un puissant alphagène favorisant la formation de ferrite. Une teneur élevée en aluminium augmenterait le point Ac3 et rendrait ainsi le procédé industriel coûteux en termes d'apport énergétique au recuit.

On considère, en outre, que des teneurs élevées en aluminium accroissent l'érosion des réfractaires et le risque de bouchage des busettes lors de la coulée de l'acier en amont du laminage. De plus l'aluminium ségrége négativement et, il peut mener à des macro-ségrégations. En quantité excessive, l'aluminium diminue la ductilité à chaud et augmente le risque d'apparition de défauts en coulée continue. Sans un contrôle poussé des conditions de coulée, les défauts de type micro et macro ségrégation donnent, in fine, une ségrégation centrale sur la tôle d'acier recuite. Cette bande centrale sera plus dure que sa matrice circonvoisine et nuira à la formabilité du matériau.

Au-delà d'une teneur en soufre de 0,005%, la ductilité est réduite en raison de la présence excessive de sulfures tels que MnS (sulfures de manganèse) qui diminuent l'aptitude à la déformation.

Le phosphore est un élément qui durcit en solution solide mais qui diminue considérablement la soudabilité par points et la ductilité à chaud, particulièrement en raison de son aptitude à la ségrégation aux joints de grains ou à sa tendance à la co-ségrégation avec le manganèse. Pour ces raisons, sa teneur doit être limitée à 0,020% afin d'obtenir une bonne aptitude au soudage par points.

Le molybdène est limité aux valeurs d'impuretés bien qu'il puisse jouer un rôle efficace sur la trempabilité et retarder l'apparition de la bainite. Cependant, son addition accroît excessivement le coût des additions d'éléments d'alliage et son usage est donc limité pour des raisons économiques.

Le bore agit fortement sur la trempabilité de l'acier. Ce dernier limite l'activité du carbone, et limite les transformations de phase diffusives (transformation ferritique ou bainitique lors du refroidissement), poussant ainsi à la formation de phases durcissante telles que la martensite. Cet effet n'est pas souhaitable dans l'invention car on souhaite promouvoir la transformation bainitique afin de stabiliser l'austénite et éviter la formation d'une trop forte proportion surfacique de Martensite. Ainsi, la teneur en Bore est limitée à 0,001%.

Les éléments de micro-alliage tels que le niobium, le titane et le vanadium sont respectivement limités aux teneurs maximales de 0,015%, 0,020% et 0,015% car ces éléments ont la particularité de former des précipités durcissant avec le carbone et/ou l'azote qui tendent aussi à réduire la ductilité du produit. En, outre, ils retardent la recristallisation lors du recuit et affinent donc la microstructure, ce qui durcit aussi le matériau et dégrade sa ductilité.

L'acier peut également comprendre du cobalt en teneurs inférieures ou égale à 1% car cet élément durcissant permet d'augmenter la teneur en carbone dans l'austénite résiduelle. Cependant son usage est limité dans l'invention pour des raisons de coûts.

Le reste de la composition est constitué de fer et d'impuretés inévitables résultant de l'élaboration.

Selon l'invention, la microstructure de l'acier est constituée, en proportions surfaciques, de 5 à 20 % de ferrite polygonale, de 10 à 15% d'austénite résiduelle, de 5 à 15 % de martensite, le solde étant constitué de bainite sous forme de lattes et comprenant entre lesdites lattes des carbures tels que le nombre N des carbures inter-lattes de taille supérieure à 0,1 micromètre par unité de surface est inférieur ou égal à 50000 / mm$^2$. Cette structure bainitique majoritaire confère une bonne résistance à l'endommagement. L'austénite résiduelle confère de la résistance et de la ductilité, la ferrite polygonale amenant aussi de la ductilité et la martensite permettant d'augmenter la résistance mécanique de la tôle. La ferrite polygonale se distingue de la ferrite bainitique en ce qu'elle comporte une densité de dislocations nettement inférieure ainsi qu'une teneur en carbone en solution solide qui est aussi inférieure à celle de la ferrite bainitique.

Une quantité d'austénite résiduelle inférieure à 10% ne permet pas d'augmenter de façon significative l'allongement uniforme. Ainsi, l'allongement uniforme de 12% ne sera pas atteint. Au-delà de 15%, Il faudrait une teneur en carbone élevée pour suffisamment la stabiliser et cela nuirait à la soudabilité de l'acier. Préférentiellement, la teneur en carbone de l'austénite résiduelle est supérieure à 0,8% afin d'obtenir une austénite résiduelle suffisamment stable à température ambiante.

La présente de martensite entre 5% et 15% permet d'atteindre la résistance mécanique visée dans le cadre de l'invention, cependant, au-delà de 15%, la fraction martensitique en pourcentage surfacique ferait perdre à la tôle sa ductilité au sens de l'allongement uniforme et de la pliabilité. En dessous de 5%, la résistance mécanique visée n'est pas atteinte. De manière préférentielle, on préférera une teneur en martensite supérieure à 10% pour avoir une certaine de marge de sécurité vis-à-vis de la résistance mécanique.

La ferrite polygonale permet dans le cadre de l'invention d'améliorer la ductilité tant à travers l'allongement uniforme qu'à travers la pliabilité en V pour atteindre les 90° visés en angle intérieur. La teneur en ferrite est comprise entre 5 et 20%. Idéalement, elle sera comprise entre 12 et 20% pour s'assurer une meilleure ductilité et une marge de sécurité sur l'allongement uniforme.

Enfin la bainite, expulsant le carbone vers l'austénite résiduelle lors de sa formation, enrichit cette dernière et permet ainsi de la stabiliser tout en étant la matrice de la tôle de l'invention.

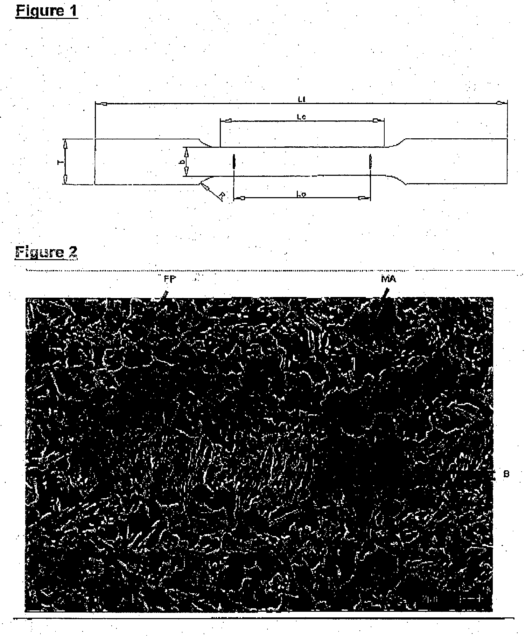

La figure 2 présente un exemple de microstructure d'une tôle d'acier selon l'invention vue au microscope électronique à balayage. L'austénite résiduelle occupe ici une fraction surfacique égale à 15%, elle apparaît en blanc, sous forme d'îlots ou de films. La martensite est présente sous la forme d'îlots en association avec l'austénite résiduelle, l'ensemble communément appelé îlots MA est révélé sous une apparence grenue due aux piqûres de l'attaque chimique du réactif (Nital). La martensite a une teneur surfacique ici égale à 11%. La ferrite polygonale apparait avec le relief creusé. La bainite se présente ici sous la forme du constituant lamellaire indiquée par les flèches noires dans la figure 2.

Au sein de certains îlots, la teneur locale en carbone et donc la trempabilité locale peuvent varier. L'austénite résiduelle est alors localement associée à de la martensite au sein de ce même îlot que l'on désigne sous le terme d'îlots « M-A », associant Martensite et Austenite résiduelle.

Le nombre de carbures de taille supérieure à 0,1 micromètre dans la microstructure, est limité. Il a été mis en évidence que N, le nombre de carbures inter-lattes de taille supérieure à 0,1 micromètre par unité de surface, doit être de préférence inférieur à 50000/mm$^2$ pour limiter l'endommagement en cas de sollicitation ultérieure, par exemple lors des essais d'expansion de trous ou de pliage en V. De plus, la présence excessive des carbures grossiers peut être à l'origine d'un amorçage précoce de la rupture lors d'une mise en forme ultérieure.

La tôle selon l'invention pourra être fabriquée par tout procédé adapté. Par exemple, on pourra utiliser le procédé selon l'invention qui peut comporter les étapes qui vont être décrite.

On approvisionne tout d'abord un acier de composition selon l'invention. Puis, on procède à la coulée d'un demi-produit à partir de cet acier. Cette coulée peut être réalisée en lingots ou en continu sous forme de brames.

Les demi-produits coulés peuvent ensuite être portés à une température $T_{rech}$ supérieure à 1150°C pour obtenir un demi-produit réchauffé afin d'atteindre en tout point une température favorable aux déformations élevées que va subir l'acier lors du laminage. Cet intervalle de température permet d'être dans le domaine austénitique. Cependant, si la température $T_{rech}$ est supérieure à 1275°C, les grains austénitiques croissent de façon indésirable et mèneront à une structure finale plus grossière.

Il est bien sur également possible de laminer à chaud directement après coulés sans réchauffer la brame.

On lamine donc à chaud le demi-produit dans un domaine de température où la structure de l'acier est totalement austénitique : si la température de fin de laminage $T_{fl}$ est inférieure à la température de début de transformation de l'austénite en ferrite au refroidissement Ar3, les grains de ferrite sont écrouis par le laminage et la ductilité est considérablement réduite.

On bobine ensuite le produit laminé à chaud à une température $T_{bob}$ comprise entre 540 et 590°C. Cette gamme de température permet d'obtenir une transformation bainitique complète pendant le maintien quasi-isotherme associé au bobinage suivi d'un refroidissement lent. Une température de bobinage supérieure à 590°C conduit à la formation d'oxydes non désirés. Lorsque la température de bobinage est trop basse, la dureté du produit est augmentée, ce qui augmente les efforts nécessaires lors du laminage à froid ultérieur.

On décape ensuite si nécessaire le produit laminé à chaud selon un procédé connu en lui-même.

On peut ensuite effectuer un recuit dit base de la tôle bobinée, de telle sorte que la température de maintien Tm soit supérieure à 410°C et que Tm et le temps de maintien tm soient tels que :

$$2{,}29 \times Tm\ (°C) + 18{,}6 \times tm(h) \geq 1238.$$

Ce traitement thermique permet d'avoir une résistance mécanique inférieure à 1000 MPa en tout point de la tôle laminée à chaud, l'écart de dureté entre le centre de la tôle et les rives étant ainsi minimisé. Ceci facilite considérablement l'étape suivante de laminage à froid par un adoucissement de la structure formée.

On effectue ensuite un laminage à froid avec un taux de réduction compris préférentiellement entre 30 et 80%.

On chauffe ensuite le produit laminé à froid, préférentiellement au sein d'une installation de recuit continu, avec une vitesse moyenne de chauffage $V_c$ comprise entre 2 et 6°C par seconde. En relation avec la température de recuit $T_1$ ci-dessous, cette gamme de vitesse de chauffage permet d'obtenir une fraction de ferrite non recristallisée strictement inférieure à 5%.

Le chauffage est effectué jusqu'à une température de recuit $T_1$ comprise entre la température Ac$_3$-15°C, et Ac$_3$-45°C, c'est à dire dans une gamme de température particulière du domaine intercritique de telle sorte que l'on obtienne une structure non exempte de ferrite polygonale formée à l'intercritique. Pour déterminer la valeur d'Ac3, on pourra utiliser par exemple une méthode dilatométrique connue en elle même.

Lorsque $T_1$ est inférieure à (Ac3-45°C), la structure peut comporter une fraction significative de ferrite et on n'obtient pas les caractéristiques mécaniques visées par l'invention. Inversement, si $T_1$ est au dessus de Ac$_3$-15°C et que l'on ne forme pas de ferrite au refroidissement suivant le maintien à $T_1$, l'allongement uniforme et la pliabilité (test du pliage en V) sont en dehors de la cible de l'invention, i.e. 12% d'allongernent uniforme et 90° en pliage en V sans apparition de fissure. De plus, lorsque la température $T_1$ s'approche du point critique Ac3, cela présente un risque car : les conditions industrielles peuvent fluctuer légèrement en cours de production. Ainsi, à l'issue du maintien à $T_1$, la microstructure peut être: soit entièrement austénitique soit partiellement ferritique avec une très faible fraction de ferrite qui serait inférieure à 5%. Ceci génère des propriétés mécaniques instables pour la tôle produite à l'issue du procédé, ce qui serait nuisible pour la mise en forme finale de pièces de structure pour véhicules terrestres à moteur.

Une température de recuit $T_1$ selon l'invention permet d'obtenir une quantité d'austénite intercritique suffisante pour former ultérieurement au refroidissement de la bainite en quantité telle que l'austenite résiduelle sera suffisamment stabilisée et les caractéristiques mécaniques désirées seront atteintes.

Une durée de maintien minimale $t_1$ supérieure ou égale à 50 s à la température $T_1$ permet la dissolution des carbures préalablement formés, et surtout une transformation suffisante en austénite. Un temps de maintien supérieur à 500 s est difficilement compatible avec les exigences de productivité des installations de recuit continu, en particulier la vitesse de défilement de la bobine. La durée de maintien $t_1$ est donc comprise entre 50 et 500 s.

A la fin du maintien de recuit, on refroidit la tôle jusqu'à atteindre une température préférentiellement comprise entre 370 et 430°C, l'idéal étant une température comprise entre Ms-20°C et Ms+40°C, la vitesse de refroidissement $V_{ref}$ étant suffisamment rapide pour éviter la formation de la perlite. A cet effet, la première étape de refroidissement est telle que la vitesse de refroidissement $V_{R1}$ est comprise entre 50 et 1500°C par seconde.

Une transformation partielle de l'austénite en ferrite peut intervenir à ce stade dans la première étape du refroidissement.Celle-ci permet, lors de l'expulsion du carbone vers l'austénite, de stabiliser cette dernière pour promouvoir l'effet TRIP car le carbone est peu soluble dans la ferrite. La teneur en carbone dans l'austénite résiduelle dépassera de préférence 0,8 % afin de stabiliser celle-ci à l'ambiante. La deuxième étape du refroidissement se doit d'éviter la formation de perlite avant le maintien dans la gamme allant de 370 à 430°C.

Le temps de maintien dans la gamme de température de 370°C à 430°C doit être supérieur à 100 secondes afin de permettre la transformation bainitique et ainsi la stabilisation de l'austénite par enrichissement en carbone de ladite austénite. Elle doit aussi être inférieure à 1000 s de façon à limiter la proportion surfacique de ferrite bainitique. Cette dernière restriction permet aussi d'éviter de former des carbures grossiers de taille supérieure à 0,1 micromètre avec une densité supérieure à 50000/mm$^2$.

On refroidit ensuite la tôle à une vitesse $V_{R2}$ comprise entre 3 et 25°C/s jusqu'à la température ambiante. On obtient ainsi une tôle d'acier laminée à froid et recuite comprenant en proportion surfacique 5 à 20 % de ferrite polygonale, 10 à 15% d'austénite résiduelle et de 5 à 15% de Martensite, le solde étant constitué de bainite.

On effectue ensuite, préférentiellement, un traitement thermique de post recuit base tel que l'on approvisionne la tôle laminée à froid et recuite à une température de maintien $T_{base}$ comprise entre 150°C et 200°C pendant un temps de maintien $t_{base}$ compris entre 10h et 48h afin d'améliorer la limite d'élasticité et la pliabilité.

En outre, les inventeurs ont constaté que de faibles variations des paramètres de fabrication au sein des conditions définies dans le procédé selon l'invention n'entraînent pas de modifications importantes de la microstructure ou des propriétés mécaniques, ce qui est un avantage pour la stabilité des caractéristiques des produits fabriqués.

La présente invention va être maintenant illustrée à partir des exemples suivants donnés à titre non limitatif.

Exemples

On a élaboré deux aciers dont les compositions figurent au tableau 1 ci-dessous, exprimées en pourcentage massique.

Tableau 1 : Compositions d'acier utilisées, la balance étant constituée de fer (% poids).

|   | C | Min | Si | Al | Cr | Cu | Ni | S | P | N | Ac3 | Ms |
|---|---|---|---|---|---|---|---|---|---|---|---|---|
| A | 0,196 | 2,195 | 1,528 | 0,038 | 0,245 | 0,009 | 0,019 | 0,002 | 0,013 | 0,004 | 835 | 392 |
| B | 0,19 | 1,49 | 1,45 | <0,01 | 0,61 | 0,5 | 0,49 | 0,002 | 0,016 | <0,01 | 840 | 403 |

L'acier A présente une composition chimique selon l'invention tandis que l'acier B, présentant une teneur en Cr trop élevée, est une référence n'étant pas selon l'invention.

Les éléments ayant une teneur indiquée comme inférieure strictement à 0.01 sont les éléments dont la teneur est considérée comme résiduelle. C'est-à-dire que cet élément n'a pas été volontairement ajouté mais sa présence est due aux impuretés des autres éléments d'alliages.

Des tôles correspondant aux compositions ci-dessus ont été produites suivant des conditions de fabrication rassemblées dans le tableau 2.

Les compositions d'aciers A et B ont fait l'objet de différentes conditions de recuit Les conditions avant laminage à chaud sont identiques avec un réchauffage à 1250°C, une température de fin de laminage de 920°C et un bobinage à 550°C. Les produits laminés à chaud sont ensuite tous décapés puis laminés à froid avec un taux de réduction compris entre 30 et 80 %.

Le tableau 2 indique les conditions de fabrication des tôles recuites après laminage à froid avec les dénominations suivantes :

- température de maintien : **$T_1$**
- température de fin de refroidissement $T_{fr}$
- temps de maintien à $T_{fr}$ : $t_1$
- traitement de post recuit base : OUI ou NON.

Le traitement de post recuit base, si effectué, l'est pendant 24 heures avec montée en température jusqu'à 170°C et maintien à cette température pendant 10H puis refroidissement libre.

Les vitesses de refroidissement entre $T_1$ et $T_{fr}$ sont toutes comprises entre 50 et 1500°C/s.

Tableau 2 : Conditions de recuit des exemples et contre exemples

| ID | Composition chimique initiale | Type | Épaisseur finale (mm) | $T_1$ (°C) | $T_{fr}$ (°C) | $t_1$ (s) | Post recuit base |
|----|----|----|----|----|----|----|----|
| I1 | A | Invention | 0,77 | 805 | 390 | 181 | OUI |
| I2 | A | Invention | 0,77 | 802 | 390 | 181 | OUI |
| I3 | A | Invention | 0,77 | 807 | 400 | 181 | OUI |
| I4 | A | Invention | 0,77 | 813 | 397 | 181 | OUI |
| I5 | A | Invention | 0,77 | 816 | 410 | 181 | OUI |
| I6 | A | Invention | 0,77 | 812 | 375 | 181 | OUI |
| I7 | A | Invention | 0,77 | 810 | 410 | 217 | OUI |
| I8 | A | Invention | 0,77 | 809 | 410 | 255 | OUI |
| I9 | A | Invention | 0,77 | 807 | 405 | 289 | OUI |
| I10 | A | Invention | 0,77 | 807 | 385 | 289 | OUI |
| I11 | A | Invention | 0,77 | 810 | 410 | 217 | NON |
| I12 | A | Invention | 0,77 | 809 | 410 | 255 | NON |
| I13 | A | Invention | 0,77 | 807 | 405 | 289 | NON |
| I14 | A | Invention | 0,77 | 807 | 385 | 289 | NON |
| R1 | A | Référence | 0,87 | <u>836</u> | 412 | 217 | OUI |
| R2 | A | Référence | 0,87 | <u>836</u> | 405 | 217 | OUI |
| R3 | A | Référence | 1,5 | <u>846</u> | 410 | 289 | OUI |
| R4 | A | Référence | 1,5 | <u>846</u> | 402 | 289 | OUI |
| R5 | B | Référence | 1.5 | <u>890</u> | 400 | 300 | NON |

Les références R1 à R5 du tableau 2 désignent les tôles d'acier fabriquées selon des conditions non conformes à l'invention. Les paramètres non conformes à l'invention sont soulignés. On note que les quatre références R1 à R4, issues de la composition A, sont non conformes à l'invention car la température de maintien $T_1$ est au dessus d'Ac3-15°C. Ac3 vaut ici 835°C par mesure dilatométrique. D'autre part, la référence R5, issue de la composition B non conforme à l'invention, a aussi été recuite au dessus du point d'Ac3-15°C.

Les exemples I1 à I14 sont ceux selon l'invention. Dans le tableau 3, figurent les propriétés microstructurales obtenues pour les échantillons analysés où l'austénite résiduelle est indiquée par γr, la ferrite polygonale par a, la martensite par M, et la bainite par B. Ces valeurs étant en pourcentage surfacique.

Tableau 3 : Proportions surfaciques des constituants (inventions et référence)

| ID | Type | γr | α | M | B |
|----|----|----|----|----|----|
| I1 | Invention | 15 | 14 | 11 | 60 |
| I2 | Invention | 15 | 20 | 15 | 50 |
| I4 | Invention | 14 | 19 | 13 | 54 |
| I5 | Invention | 10 | 13 | 14 | 63 |
| I6 | Invention | 14 | 14 | 14 | 58 |
| R1 | Référence | 15 | <u>0</u> | <u>22</u> | 63 |
| R5 | Référence | 14 | <u>0</u> | <u>19</u> | 67 |

On mesure ensuite les propriétés mécaniques en utilisant une éprouvette de type ISO 20x80 avec les dimensions du tableau 4 illustrées par la figure 1. Les tractions uni-axiales permettant d'obtenir ces propriétés mécaniques sont faites dans le sens parallèle à celui du laminage à froid.

Tableau 4 : Dimensions des éprouvettes de traction, exprimées en mm

| Type | b | Lo | Lc | R | T | Lt | Dimension ébauche |
|------|---|----|----|---|---|----|-------------------|
| ISO 20x80 | 20 | 80 | 100 | 20 | 30 | 260 | 260 x 32 |

Toutes les tôles selon l'invention présentent une bainite sous forme de lattes avec des carbures inter-lattes tels que le nombre N de ces carbures de taille supérieure à 0,1 micromètre par unité de surface est inférieur ou égal à 50000 / mm$^2$

Lors du test de pliage en V, l'apparition de fissure dans le matériau se manifeste par une chute de la force appliquée par la machine de 5% lors du pli de la tôle. Le test est alors arrêté à ce stade et l'angle intérieur est mesuré après retour élastique, sa différence avec 180° donne l'angle complémentaire qui doit être supérieur à 90° dans le cadre de l'invention.

Les propriétés mécaniques de traction obtenues ont été portées au tableau 5 ci-dessous avec les abréviations suivantes :

- la limite d'élasticité : Re
- la résistance mécanique : Rm
- l'allongement uniforme : Al. Unif.
- le pliage en V avec l'angle complémentaire (°) à partir auquel apparaît la fissure: V bend.
- Ne : Non évalué

Tableau 5 : propriétés mécaniques des références et de l'invention

| ID | Re (MPa) | Rm (MPa) | Al. Unif. (%) | V bend (°) |
|----|----------|----------|---------------|------------|
| I1 | 627 | 1073 | 13,6 | 115,5 |
| I2 | 628 | 1072 | 13,6 | 111,0 |
| I3 | 633 | 1073 | 13,4 | 111,8 |
| I4 | 682 | 1110 | 12,8 | 107,3 |
| I5 | 708 | 1129 | 12,6 | 104,0 |
| I6 | 706 | 1111 | 12,3 | 99,3 |
| I7 | 621 | 1099 | 13,7 | 111,0 |
| I8 | 735 | 1136 | 92,1 | 100,0 |
| I9 | 632 | 1127 | 13,2 | 108,0 |
| I10 | 639 | 1122 | 13,4 | 105,0 |
| I11 | 531 | 1099 | 13,7 | 100,0 |
| I12 | 543 | 1138 | 13,2 | 90,0 |
| I13 | 637 | 1151 | 12,7 | 96,0 |
| I14 | 566 | 1142 | 13,2 | 97,0 |
| R1 | 900 | 1208 | 9,2 | 86,0 |
| R2 | 881 | 1186 | 9,4 | Ne |
| R3 | 912 | 1270 | 8,3 | 60,6 |
| R4 | 913 | 1233 | 8,9 | Ne |
| R5 | 1020 | 1395 | 5,0 | 87,0 |

On note que les cinq références R1 à R5 présentent des allongements uniformes ainsi que des valeurs pliage en V non conformes aux cibles de l'invention.

L'invention permet de mettre à disposition une tôle d'acier apte au dépôt d'un revêtement de Zinc, en particulier par les procédés usuels d'électro-zingage.

Elle permet de mettre à disposition un acier présentant une bonne aptitude au soudage au moyen des procédés d'assemblage usuels tels que, par exemple et à titre non limitatif, le soudage par résistance par points.

Les tôles d'aciers selon l'invention seront utilisées avec profit pour la fabrication de pièces de structures, éléments de renforts, de sécurité, anti abrasives ou de disques de transmissions pour applications dans les véhicules terrestres à moteur.

**Revendications**

1. Tôle d'acier laminée à froid et recuite de résistance mécanique supérieure ou égale à 1000 MPa, d'allongement uniforme supérieur ou égal à 12%, dont l'angle de pliage en V à partir duquel apparaît la fissure est supérieur ou égal à 90°, dont la composition comprend, les teneurs étant exprimées en poids.

$$0,15\% \leq C \leq 0,25\%$$

$$1,8\% \leq Mn \leq 3,0\%$$

$$1,2\% \leq Si \leq 2\%$$

$$Al \leq 0,10\%$$

$$0\% \leq Cr \leq 0,50\%$$

$$0\% \leq Cu \leq 1\%$$

$$0\% \leq Ni \leq 1\%$$

$$S \leq 0,005\%$$

$$P \leq 0,020\%$$

$$Nb \leq 0,015\%$$

$$Ti \leq 0,020\%$$

$$V \leq 0,015\%$$

$$Co \leq 1\%$$

$$N \leq 0,008\%$$

$$B \leq 0,001\%$$

étant entendu que

$$Mn + Ni + Cu \leq 3\%$$

le reste de la composition étant constitué de fer et d'impuretés inévitables résultant de l'élaboration, la microstructure étant constituée, en proportions surfaciques, de 5 à 20 % de ferrite polygonale, de 10 à 15% d'austénite résiduelle, de 5 à 15 % de martensite, le solde étant constitué de bainite sous forme de lattes et comprenant entre lesdites lattes des carbures tels que le nombre N des carbures inter-lattes de taille supérieure à 0,1 micromètre par unité de surface est inférieur ou égal à 50000/mm$^2$

2. Tôle d'acier selon la revendication 1 dont la composition comprend, la teneur étant exprimée en poids

$$0,18\% \leq C \leq 0,22\%$$

3. Tôle d'acier selon la revendication 1 ou la revendication 2 dont la composition comprend, la teneur étant exprimée en poids

$$2\% \leq Mn \leq 2,6\%$$

4. Tôle d'acier selon l'une quelconque des revendications 1 à 3 dont la composition comprend, la teneur étant exprimée en poids

$$1,4\% \leq Si \leq 1,8\%$$

5. Tôle d'acier selon l'une quelconque des revendications 1 à 4 dont la composition comprend, la teneur étant exprimée en poids

$$0\% \leq Cr \leq 0,35\%$$

6. Tôle d'acier selon l'une quelconque des revendications 1 à 5 comportant en outre un revêtement de Zinc ou d'alliage de zinc.

7. Procédé de fabrication d'une tôle d'acier laminée à froid recuite de résistance supérieure ou égale à 1000 MPa et d'allongement supérieur ou égal à 12%, dont l'angle de pliage en V à partir duquel apparaît la fissure est supérieur ou égal à 90°, comprenant les étapes selon lesquelles :

- on approvisionne un acier de composition selon l'une quelconque des revendications 1 à 5, puis
- on coule ledit acier sous forme de demi-produit, puis
- on porte ledit demi-produit à une température T$_{rech}$ supérieure à 1150°C pour obtenir un demi-produit réchauffé, puis
- on lamine à chaud ledit demi-produit réchauffé, la température de fin de laminage à chaud T$_{fl}$ étant supérieure ou égale à 850°C pour obtenir une tôle laminée à chaud, puis
- on bobine ladite tôle laminée à chaud à une température T$_{bob}$ comprise entre 540 et 590°C pour obtenir une tôle laminée à chaud bobinée puis,

- on refroidit ladite tôle laminée à chaud bobinée jusqu'à la température ambiante, puis,
- on effectue un recuit dit base de ladite tôle laminée à chaud bobinée de telle sorte que la résistance mécanique soit inférieure ou égale à 1000 MPa en tout point de ladite tôle laminée à chaud bobinée, puis
- on débobine et on décape ladite tôle laminée à chaud bobinée recuite de façon à obtenir une tôle laminée à chaud apte au laminage à froid, puis
- on lamine à froid ladite tôle laminée à chaud apte au laminage à froid avec un taux de réduction compris entre 30 et 80% de façon à obtenir une tôle laminée à froid, puis,
- on recuit ladite tôle laminée à froid en la réchauffant à une vitesse Vc comprise entre 2 et 6°C par seconde jusqu'à une température $T_1$ comprise entre Ac3-15°C et Ac3-45°C, pendant une durée $t_1$ supérieure ou égale à 50 secondes, puis,
- on refroidit ladite tôle laminée à froid en la soumettant à une première étape de refroidissement à une vitesse de refroidissement comprise entre 50 et 500°C/s puis à une seconde étape de refroidissement telle que la température de fin de refroidissement $T_{fr}$ de ladite seconde étape soit comprise entre une température $T_{fr1}$ égale à Ms-20°C et une température $T_{fr2}$ égale à Ms+40°C, puis
- on maintient dans l'intervalle de température compris entre $T_{fr1}$ et $T_{fr2}$ ladite tôle laminée à froid pendant une durée $t_2$ comprise entre 100 et 1000 secondes, puis
- on refroidit la tôle laminée à froid à une vitesse $V_{R2}$ comprise entre 3 et 25°C par seconde jusqu'à la température ambiante de façon à obtenir une tôle laminée à froid et recuite.

**8.** Procédé de fabrication selon la revendication 7, pour lequel ladite température Tfl est supérieure ou égale à 900°C.

**9.** Procédé de fabrication selon l'une quelconque des revendications 7 ou 8, pour lequel ledit recuit base comporte un maintien dont la température Tm est le temps tm sont tels que :

$$2{,}29 \times Tm \ (°C) + 18{,}6 \times tm \ (h) \geq 1238,$$

la température de maintien Tm étant en outre supérieure à 410°C.

**10.** Procédé de fabrication d'une tôle selon l'une quelconque des revendications 7 à 9, pour lequel ladite température $T_1$ est comprise entre 790°C et 820°C.

**11.** Procédé de fabrication d'une tôle revêtue selon lequel on approvisionne une tôle laminée à froid recuite selon l'une quelconque des revendications 7 à 10 et qu'on revêt ladite tôle laminée à froid recuite de Zinc ou d'alliage de Zinc.

**12.** Procédé de fabrication d'une tôle laminée à froid recuite et éventuellement revêtue selon lequel on approvisionne une tôle laminée à froid recuite selon l'une quelconque des revendications 7 à 11 et qu'on recuit ladite tôle approvisionnée à une température de maintien $T_{base}$ comprise entre 150°C et 200°C pendant un temps de maintien $t_{base}$ compris entre 10h et 48h.

**13.** Utilisation d'une tôle laminée à froid et recuite selon l'une quelconque des revendications 1 à 5, ou d'une tôle revêtue selon 6 ou fabriquée par un procédé selon l'une quelconque des revendications 7 à 12 pour la fabrication de pièces pour véhicules terrestres à moteur.

**Patentansprüche**

**1.** Kaltgewalztes und geglühtes Stahlblech mit einer mechanischen Festigkeit größer oder gleich 1000 MPa, einer gleichförmigen Dehnung größer oder gleich 12%, dessen V Biegewinkel, von dem ab der Riss erscheint, größer oder gleich 90° ist, dessen Zusammensetzung umfasst, wobei die Gehalte in Gewichtsprozenten ausgedrückt sind:

$$0{,}15\% \leq C \leq 0{,}25\%$$

$$1{,}8\% \leq Mn \leq 3{,}0\%$$

$$1{,}2\% \leq Si \leq 2\%$$

$$Al \leq 0{,}10\%$$

$$0\% \leq Cr \leq 0{,}50\%$$

$$0\% \leq Cu \leq 1\%$$

$$0\% \leq Ni \leq 1\%$$

$$S \leq 0{,}005\%$$

$$P \leq 0.020\%$$

$$Nb \leq 0{,}015\%$$

$$Ti \leq 0{,}020\%$$

$$V \leq 0{,}015\%$$

$$Co \leq 1\%$$

$$N \leq 0{,}008\%$$

$$B \leq 0{,}001\%$$

wobei

$$Mn+Ni+Cu \leq 3\%,$$

wobei der Rest der Zusammensetzung aus Eisen und unvermeidbaren Verunreinigungen, die aus der Bearbeitung resultieren, gebildet ist, die Mikrostruktur in Flächenverhältnissen aus 5 bis 20% polygonalem Ferrit, 10 bis 15% Restaustenit, 5 bis 15% Martensit besteht, und der Ausgleich aus Bainit in Form von Latten gebildet ist und zwischen diesen Latten Carbide aufweist, derart, dass die Anzahl N von zwischen den Latten vorhandenen Carbiden mit einer Größe größer als 0,1 Mikrometer pro Flächeneinheit kleiner oder gleich 50000/mm$^2$ ist.

2. Stahlblech nach Anspruch 1, dessen Zusammensetzung umfasst, wobei der Gehalt in Gewichtsprozenten ausgedrückt ist

$$0{,}18\% \leq C \leq 0{,}22\%.$$

**3.** Stahlblech nach Anspruch 1 oder Anspruch 2, dessen Zusammensetzung umfasst, wobei der Gehalt in Gewichtsprozenten ausgedrückt ist

$$2\% \leq Mn \leq 2,6\%.$$

**4.** Stahlblech nach einem beliebigen der Ansprüche 1 bis 3, dessen Zusammensetzung umfasst, wobei der Gehalt in Gewichtsprozenten ausgedrückt ist

$$1,4\% \leq Si \leq 1,8\%.$$

**5.** Stahlblech nach einem beliebigen der Ansprüche 1 bis 4, dessen Zusammensetzung umfasst, wobei der Gehalt in Gewichtsprozenten ausgedrückt ist

$$0\% \leq Cr \leq 0,35\%.$$

**6.** Stahlblech nach einem beliebigen der Ansprüche 1 bis 5, außerdem eine Beschichtung aus Zink oder einer Zinklegierung aufweisend.

**7.** Verfahren zur Herstellung eines kaltgewalzten geglühten Stahlblechs mit einer Festigkeit größer oder gleich 1000 MPa und einer Dehnung größer oder gleich 12%, dessen V Biegewinkel, von dem ab der Riss erscheint, größer oder gleich 90° ist, umfassend die Schritte, nach denen:

- ein Stahl der Zusammensetzung nach einem beliebigen der Ansprüche 1 bis 5 bereitgestellt wird, dann
- der Stahl in Form eines Halbzeugs gegossen wird, dann
- das Halbzeug auf eine Temperatur $T_{rech}$ größer als 1150°C gebracht wird, um ein aufgeheiztes Halbzeug zu erhalten, dann
- das aufgeheizte Halbzeug warmgewalzt wird, um ein warmgewalztes Blech zu erhalten, wobei die Endwarmwalztemperatur $T_{fl}$ größer oder gleich 850°C ist, dann
- das warmgewalzte Blech bei einer Temperatur $T_{bob}$ zwischen 540 und 590°C gewickelt wird, um ein gewickeltes warmgewalztes Blech zu erhalten, dann
- das gewickelte warmgewalzte Blech bis zur Umgebungstemperatur abgekühlt wird, dann
- ein Glühen, genannt Basisglühen, des gewickelten warmgewalzten Blechs durchgeführt wird, derart, dass die mechanische Festigkeit kleiner oder gleich 1000 MPa an jedem Punkt des gewickelten warmgewalzten Blechs wird, dann
- das gewickelte, geglühte warmgewalzte Blech abgewickelt und gebeizt wird, um ein warmgewalztes Blech zu erhalten ist, das für das Kaltwalzen geeignet ist, dann
- das warmgewalzte, für ein Kaltwalzen geeignete Blech mit einem Reduktionsgrad zwischen 30 und 80% kaltgewalzt wird, um ein kaltgewalztes Blech zu erhalten, dann
- das kaltgewalzte Blech geglüht wird, indem es bei einer Geschwindigkeit Vc zwischen 2 und 6°C pro Sekunde auf eine Temperatur $T_1$ zwischen Ac3-15°C und Ac3-45°C während einer Dauer $t_1$ größer als oder gleich 50 Sekunden wieder aufgeheizt wird, dann
- das kaltgewalzte Blech abgekühlt wird, indem es einem ersten Abkühlschritt bei einer Abkühlgeschwindigkeit zwischen 50 und 1500°C/s, dann einem zweiten Abkühlschritt unterworfen wird, derart, dass die Endtemperatur $T_{fr}$ des zweiten Schritts zwischen einer Temperatur $T_{fr1}$ gleich Ms-20°C und einer Temperatur $T_{fr2}$ gleich Ms+40°C liegt, dann
- das kaltgewalzte Blech während einer Dauer $t_2$ zwischen 100 und 1000 Sekunden in dem Temperaturbereich zwischen $T_{fr1}$ und $T_{fr2}$ gehalten wird, dann
- das kaltgewalzte Blech bei einer Geschwindigkeit $V_{R2}$ zwischen 3 und 25°C pro Sekunde bis zur Umgebungstemperatur abgekühlt wird, um ein kaltgewalztes und geglühtes Blech zu erhalten.

**8.** Verfahren zur Herstellung nach Anspruch 7, für das die Temperatur Tfl größer oder gleich 900°C ist.

**9.** Verfahren zur Herstellung nach einem beliebigen der Ansprüche 7 oder 8, für das das Basisglühen ein Halten aufweist, dessen Temperatur Tm und Zeit tm derart sind, dass:

$$2,29 \times T_m(°C) + 18,6 \times t_m(h) \geq 1238,$$

wobei die Haltetemperatur $T_m$ außerdem größer als 410°C ist.

10. Verfahren zur Herstellung eines Blechs, nach einem beliebigen der Ansprüche 7 bis 9, für das die Temperatur $T_1$ zwischen 790°C und 820°C liegt.

11. Verfahren zur Herstellung eines beschichteten Blechs, nach dem ein kaltgewalztes geglühtes Blech nach einem beliebigen der Ansprüche 7 bis 10 bereitgestellt wird und das kaltgewalzte geglühte Blech mit Zink oder einer Zinklegierung beschichtet wird.

12. Verfahren zur Herstellung eines kaltgewalzten, geglühten und gegebenenfalls beschichteten Blechs, nach dem ein kaltgewalztes geglühtes Blech nach einem beliebigen der Ansprüche 7 bis 11 bereitgestellt wird und das bereitgestellte Blech bei einer Haltetemperatur $T_{base}$ zwischen 150°C und 200°C während einer Haltezeit $t_{base}$ zwischen 10 Stunden und 48 Stunden geglüht wird.

13. Verwendung eines kaltgewalzten und geglühten Blechs nach einem beliebigen der Ansprüche 1 bis 5 oder eines beschichteten Blechs nach Anspruch 6 oder hergestellt nach einem Verfahren nach einem beliebigen der Ansprüche 7 bis 12 für die Herstellung von Teilen für motorgetriebene Landfahrzeuge.

**Claims**

1. Cold-rolled and annealed steel sheet with mechanical strength greater than or equal to 1000 MPa, with uniform elongation greater than or equal to 12%, the V-bending angle of which as from which cracking appears is greater than or equal to 90°, the composition of which comprises, the proportions being expressed by weight:

$$0.15\% \leq C \leq 0.25\%$$

$$1.8\% \leq Mn \leq 3.0\%$$

$$1.2\% \leq Si \leq 2\%$$

$$Al \leq 0.10\%$$

$$0\% \leq Cr \leq 0.50\%$$

$$0\% \leq Cu \leq 1\%$$

$$0\% \leq Ni \leq 1\%$$

$$S \leq 0.005\%$$

$$P \leq 0.020\%$$

$$Nb \leq 0.015\%$$

$$Ti \leq 0.020\%$$

$$V \leq 0.015\%$$

$$Co \leq 1\%$$

$$N \leq 0.008\%$$

$$B \leq 0.001\%$$

it being understood that

$$Mn + Ni + Cu \leq 3\%$$

the remainder of the composition consisting of iron and unavoidable impurities resulting from production, the microstructure consisting, in surface proportions, of 5% to 20% polygonal ferrite, 10% to 15% residual austenite and 5% to 15% martensite, the balance consisting of bainite in the form of laths and comprising, between said laths, carbides such that the number N of inter-lath carbides with a size greater than 0.1 micrometres per surface unit is less than or equal to $50,000/mm^2$.

2. Steel sheet according to claim 1, the composition of which comprises, the content being expressed by weight:

$$0.18\% \leq C \leq 0.22\%$$

3. Steel sheet according to claim 1 or claim 2, the composition of which comprises, the content being expressed by weight:

$$2\% \leq Mn \leq 2.6\%$$

4. Steel sheet according to any of claims 1 to 3, the composition of which comprises, the content being expressed by weight:

$$1.4\% \leq Si \leq 1.8\%$$

5. Steel sheet according to any of claims 1 to 4, the composition of which comprises, the content being expressed by weight:

$$0\% \leq Cr \leq 0.35\%$$

6. Steel sheet according to any one of claims 1 to 5, further comprising a zinc or zinc alloy coating.

7. Method for manufacturing an annealed cold-rolled steel sheet with mechanical strength greater than or equal to 1000 MPa and elongation greater than or equal to 12%, wherein the angle of bending in a V as from which cracking appears is greater than or equal to 90°, comprising the steps according to which:

    - a steel with a composition according to any of claims 1 to 5 is procured, then
    - said steel is cast in the form of a semi-finished product, then

- said semi-finished product is raised to a temperature $T_{rech}$ greater than 1150°C in order to obtain a heated semi-finished product, then
- said heated semi-finished product is hot-rolled, the end-of-hot-rolling temperature $T_{f1}$ being greater than or equal to 850°C in order to obtain a hot-rolled sheet, then
- said hot-rolled sheet is coiled at a temperature $T_{bob}$ of between 540°C and 590°C in order to obtain a coiled hot-rolled sheet, then
- said coiled hot-rolled sheet is cooled to ambient temperature, then
- a so-called basic annealing is carried out on said coiled hot-rolled sheet so that the mechanical strength is less than or equal to 1000 MPa at every point on said coiled hot-rolled sheet, then
- said annealed coiled hot-rolled sheet is uncoiled and pickled so as to obtain a hot-rolled sheet suitable for cold rolling, then
- said hot-rolled sheet suitable for cold rolling is cold-rolled with a degree of reduction between 30% and 80% so as to obtain a cold-rolled sheet, then
- said cold-rolled sheet is annealed by heating it at a rate Vc of between 2°C and 6°C per second to a temperature $T_1$ of between Ac3-15°C and Ac3-45°C, for a period $t_1$ greater than or equal to 50 seconds, then
- said cold-rolled sheet is cooled by subjecting it to a first cooling step at a cooling rate of between 50°C and 1500°C/s and then to a second cooling step such that the end-of-cooling temperature $T_{fr}$ of said second step is between a temperature $T_{fr1}$ equal to Ms-20°C and a temperature $T_{fr2}$ equal to Ms+40°C, then
- said cold-rolled sheet is maintained in the temperature range between $T_{fr1}$ and $T_{fr2}$ for a period $t_2$ of between 100 and 1000 seconds, then
- the cold-rolled sheet is cooled at a rate $V_{R2}$ of between 3° and 25° per second to ambient temperature so as to obtain a cold-rolled and annealed sheet.

8. Manufacturing method according to claim 7, for which said temperature $T_{f1}$ is greater than or equal to 900°C.

9. Manufacturing method according to one of claims 7 or 8, for which said basic annealing comprises a maintenance, the temperature Tm and the time tm of which are such that:

$$2.29 \ x \ Tm \ (°C) \ + \ 18.6 \ x \ tm \ (h) \ \geq \ 1238.$$

the maintenance time Tm further being greater than 410°C.

10. Method for manufacturing a sheet according to any one of claims 7 to 9, for which said temperature $T_1$ is between 790°C and 820°C.

11. Method for manufacturing a coated sheet according to which an annealed cold-rolled sheet according to any one of claims 7 to 10 is procured and said annealed cold-rolled sheet is coated with zinc or zinc alloy.

12. Method for manufacturing a cold-rolled, annealed and optionally coated sheet according to which a cold-rolled annealed sheet according to any one of claims 7 to 11 is procured and said procured sheet is annealed at a maintenance temperature $T_{base}$ of between 150°C and 200°C for a maintenance time of $t_{base}$ of between 10 hours and 48 hours.

13. Use of a cold-rolled and annealed sheet according to any one of claims 1 to 5 or of a coated sheet according to claim 6 or manufactured by a method according to any one of claims 7 to 12 for manufacturing parts for powered land vehicles.

## Figure 1

## Figure 2

Figure 3

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2007077933 A
- GB 2452231 A
- US 20100307644 A1